# EUROPEAN PATENT APPLICATION

(11) **EP 3 001 280 A2**
(43) Date of publication of application: **30.03.2016**
(21) Application number: 15180091.9
(22) Date of filing: 06.08.2015
(51) Int. Cl.: G06F 1/32

(54) **LOW-POWER OPERATION METHOD AND ASSOCIATED ELECTRONIC DEVICE**

(30) Priority: 05.09.2014 US 201414478116; 22.09.2014 US 201462053470 P; 30.04.2015 US 201514700578
(71) Applicant: MediaTek, Inc, Hsin-Chu 300 (TW)
(72) Inventor: HSIAO, Chih-Hsiang, 114 Taipei City (TW); LI, Yun-Ching, 334 Taoyuan City (TW); HSU, Jih-Ming, 320 Taoyuan City (TW); WU, Hua, 302 Jhubei City (TW)
(74) Representative: Chew, Kwan Chong Daniel

(57) **Abstract**

A low-power operation method and associated electronic device are provided. The electronic device includes a display unit, a first control system, and a second control system. The display unit includes a first display area and a second display area. The first control system and the second control system control displaying of the first display area and the second display area, respectively. Activation of the first control system and the second control system is based on a hardware configuration of the electronic device. The first display area is larger than the second display area, and the second control system has lower active power than the first control system.

## Description

### BACKGROUND OF THE INVENTION

### Field of the Invention

The invention relates to an electronic device, and, in particular, to a low-power optimization mechanism in an electronic device including different control systems.

### Description of the Related Art

With recent advances in technology, mobile devices have become more and more popular. Currently, the screen on a mobile device such as a smartphone, a tablet PC, or a smart watch can be turned off to save power. However, the user has to manually turn the screen on before checking information or using applications on the mobile device. Accordingly, it is inconvenient and power-consuming to awaken the whole mobile device to a working mode if the user only wants to check some simple information, e.g. time, or use a simple application, e.g. viewing text messages or a calendar.

Accordingly, there is demand for an electronic device and an associated low-power optimization method to solve the aforementioned problem.

### BRIEF SUMMARY OF THE INVENTION

A detailed description is given in the following embodiments with reference to the accompanying drawings.

An electronic device is provided. The electronic device includes a display unit, a first control system, and a second control system. The display unit includes a first display area and a second display area. The first control system and the second control system control displaying of the first display area and the second display area, respectively. Activation of the first control system and the second control system is based on a hardware configuration of the electronic device. The first display area is larger than the second display area, and the second control system has lower active power than the first control system.

A low-power optimization method for an electronic device is provided. The electronic device comprises a display unit, a first control system, and a second control system. The method includes the steps of: utilizing the first control system and the second control system to control displaying of a first display area and a second display area of the display unit, respectively; controlling activation of the first control system and the second control system based on a hardware configuration of the electronic device, wherein the first display area is larger than the second display area, and the second control system has lower active power than the first control system.

### BRIEF DESCRIPTION OF THE DRAWINGS

The invention can be more fully understood by reading the subsequent detailed description and examples with references made to the accompanying drawings, wherein:
FIG. 1 is a diagram of an electronic device in accordance with an embodiment of the invention;
FIG. 2 is a diagram illustrating the first display area and the second display area of the electronic device in accordance with an embodiment of the invention;
FIGs. 3A∼3C are diagrams illustrating different hardware configurations of the first control system and the second control system in the electronic device in accordance with an embodiment of the invention;
FIG. 4A is a diagram of a virtual battery partitioning structure in accordance with an embodiment of the invention;
FIG. 4B is a diagram of virtual battery arrangement and mapping to subsystems in accordance with an embodiment of the invention; and
FIG. 5 is a flow chart of a low-power optimization method in accordance with an embodiment of the invention.

### DETAILED DESCRIPTION OF THE INVENTION

The following description is made for the purpose of illustrating the general principles of the invention and should not be taken in a limiting sense. The scope of the invention is best determined by reference to the appended claims.

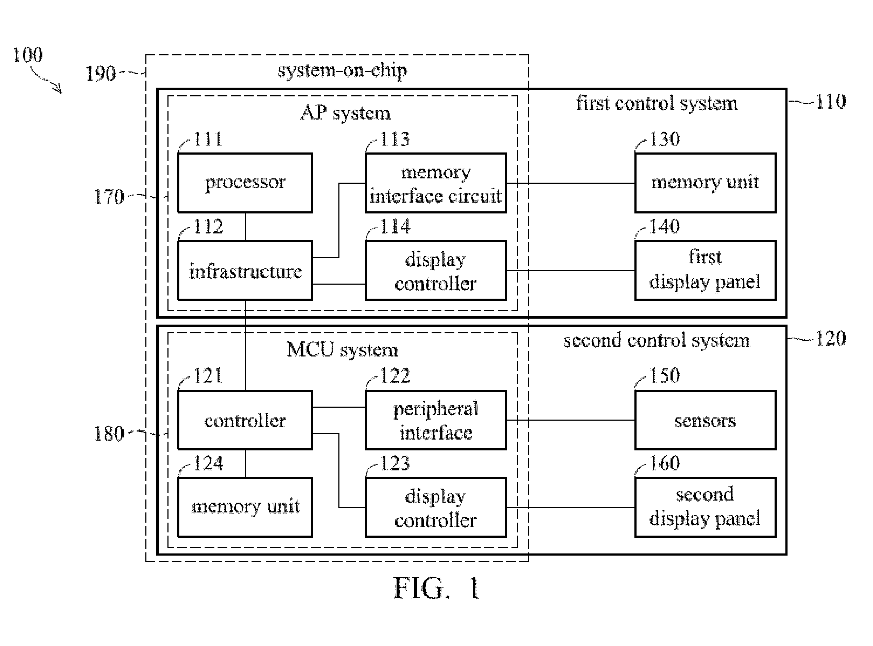

FIG. 1 is a diagram of an electronic device 100 in accordance with an embodiment of the invention. The electronic device 100 comprises a first control system 110 and a second control system 120. The first control system 110 provides an execution environment for running applications using more system resources in a rich application mode. The second control system 120 controls the peripherals connected to the electronic device, such as the sensors 150, touch control module (not shown), speakers (not shown), etc., but the invention it not limited thereto. The second control system 120 also provides an ultra-low-power execution environment for running applications or performing operations which use very limited system resources.

In this embodiment, the first control system 110 comprises a processor 111, an infrastructure 112, an memory interface circuit 113, a display controller 114, a memory unit 130, and a first display panel 140. The processor 111 may be a central processing unit (CPU), a digital signal processor (DSP), or the like. The infrastructure 112 is an intermediary (e.g. a system bus and/or an interface circuit) communicating between the processor 111, the memory interface circuit113, the display controller 114 and the second control system 120. The memory interface circuit 113 provides a memory interface communicating between the processor 111 and the memory unit 130. The memory unit 130 is connected to the processor 111 through the memory interface circuit 113. In some embodiments, the memory interface circuit 113 can be omitted, and the memory unit 130 is directly connected to the processor 111 through the infrastructure 112. The display controller 114 is configured to control the display timing and generate the display data to the first display panel 140.

For example, the memory unit 130 may comprise a non-volatile memory and a volatile memory, e.g. DRAM (not shown in FIG. 1). The volatile memory may be applied as a main memory for the processor 111 for executing software routines and other selective storage functions. The non-volatile memory, such as a flash memory, is capable of holding instructions and data without power and may store the software routines for controlling the electronic device 100 in the form of computer-readable program instructions.

The first display panel 140 is connected to the first control system 110 through the display controller 114. The first display panel 140, for example, can be implemented by liquid crystal display (LCD), light-emitting diode (LED), or organic light-emitting diode (OLED) technologies, but the invention is not limited thereto. The processor 111 may display a first user interface on the first display panel 140 through the display controller 114.

The second control system 120 comprises a controller 121, a peripheral interface 122, a display controller 123, a memory unit 124, a plurality of sensors 150, and a second display panel 160. For example, the memory unit 124 may be a volatile memory such as an SRAM or a tightly-coupled memory. The memory unit 124 may be applied as a main memory for the controller 121 for executing software routines and other selective storage functions. The controller 121, for example, may be a processor or a microcontroller.

The sensors 150, for example, comprise at least one of a pedometer (e.g. accelerometer and gyroscope), an ambient light sensor, a proximity sensor, and the like. The sensors 150 are connected to the processor 121 through the peripheral interface 122 such as SPI, UART, or SDIO interface. In addition, other types of peripheral devices can also be connected to the processor 121 through the peripheral interface 122, such as a touch control module, a speaker, etc. In addition, the second display panel 160 is connected to the processor 121 through the display controller 123. In an embodiment, the second display panel 160 is an ultra-low-power display panel such as an E-ink panel or an OLED panel, but the invention is not limited thereto.

In an embodiment, the components 111∼114 of the first control system 110 can be regarded as an application (AP) system 170, and are integrated into a single chip. The components 121∼124 of the second control system 120 can be regarded as a microcontroller (MCU) system 180, and are also integrated into another chip. In an alternative embodiment, the components of the AP system and the MCU system can be integrated into a system-on-chip (SoC) 190.

In an embodiment, when the first control system 110 enters a sleep mode, power to the components (e.g. 111∼114) of the first control system 110 may also be turned off to save power. Meanwhile, the second control system 120 and the components (e.g. sensors 150, and the second display panel 160) connected to the second control system 120 are still running, and the user may still control the electronic device 100, e.g. by tapping on the icons of the user interface displayed on the second display panel 160, or by performing a predetermined gesture or touch action, e.g. double tap, on the second display panel 160. Since the second display panel 160 is an ultra-low-power display panel with very low active power, the overall power consumption of the electronic device can be significantly reduced when the first control system 110 enters the sleep mode. The memory unit 130 and the first display panel 140 are deactivated. If the user only wants to use a simple function, e.g. viewing current time or text messages, or making a phone call, the second control system 120 could handle the operation without awakening all the components of the first control system 110.

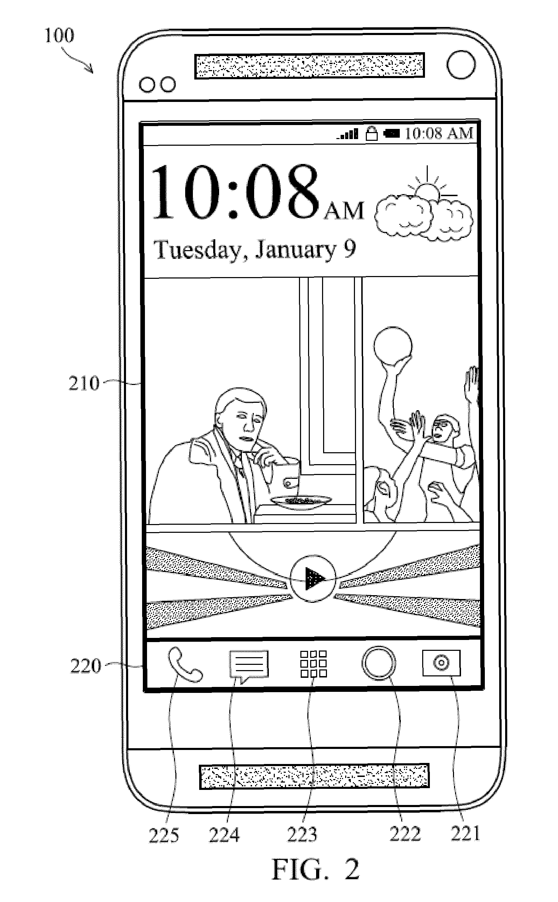

FIG. 2 is a diagram illustrating a first display area 210 and a second display area 220 of the electronic device 100 in accordance with an embodiment of the invention. The first display panel 140 and the second display panel 160 form a user display panel of the electronic device 100. The first control system 110 and the second control system 120 control the first display area 210 and the second display area 220 of the display panel of the electronic device 100, respectively. Specifically, the first display area 210 of the display panel provides a colorful display environment and user interface for the rich applications running on the processor 111, and has higher active power. The second display area 220 of the display panel provides a relatively simple display environment and a user interface for the applications running on the processor 121, and has a lower active power. Preferably, the area of the first display area 210 is much larger than that of the second display area 220, as shown in FIG. 2.

In an embodiment, the first control system 110 can be awakened to the working mode from the sleep mode by the second control system 120. For example, the user may tap on the icons 221∼222 of the user interface, e.g. the "smart bar" shown in FIG. 2, displayed on the second display panel 160 to execute a rich application. For example, the icon 221 is for activating a photographing application, and the icon 222 is for activating an internet browsing application. Then, the processor 121 may inform the processor 111 to be awakened to the working mode from the sleep mode through the infrastructure 112. Additionally, the user may also perform a predetermined gesture or touch action, e.g. double tap, on the display area of the second display panel 160. When the processor 121 has detected the predetermined gesture performed by the user, the controller 121 informs the processor 111 to be awakened to the working mode from the sleep mode through the infrastructure 112. In other words, the first control system 110 is awakened to a working mode from the sleep mode by the second control system 120 when the predetermined gesture performed on the second display area and is detected by the second control system 120. The user may also tap on the icons 223∼225 to perform simple operations by using the second control system 120 only. For example, the icon 223 is for showing the list of installed applications, and the icon 224 is for viewing text messages, and the icon 225 is for initializing a phone call application.

In an embodiment, the first display panel 140 and the second display panel 160 are integrated into a single display panel, and the first control system 110 and the second control system 120 control a first display area and a second display area of the display panel of the electronic device 100, respectively. Specifically, the first display area of the display panel provides a colorful display environment as a user interface for the rich applications running on the processor 111, and has higher active power. The second display area of the display panel provides a relatively simple display environment as a user interface for the applications running on the processor 121, and has a lower active power. In addition, the area of the first display area is much larger than that of the second display area, as shown in FIG. 2. For example, when the electronic device 100 enters the sleep mode, the second control system 120 is still running to provide simple information and functions to the user, and the user may also press on the icon of the user interface displayed on the second display area of the display panel to execute an application or perform a corresponding operation.

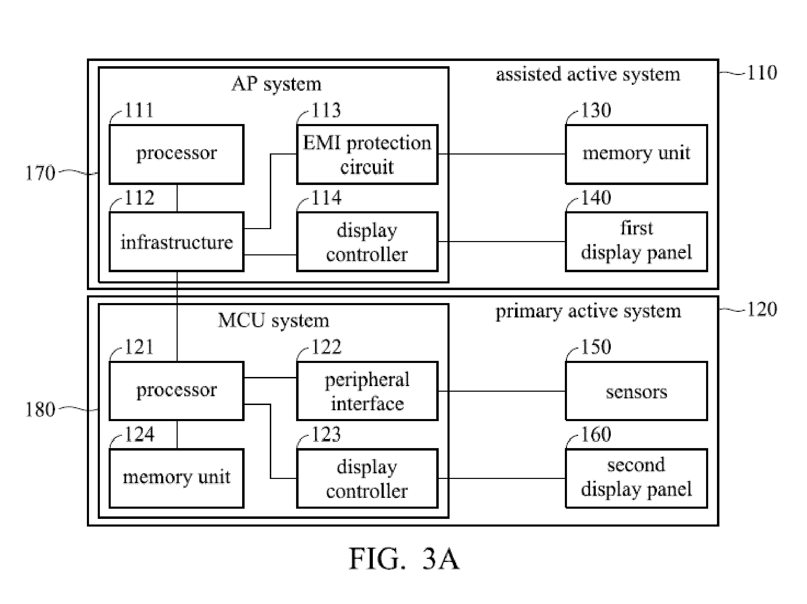

FIGs. 3A∼3C are diagrams illustrating different hardware configurations of the first control system and the second control system in the electronic device in accordance with an embodiment of the invention. The hardware configuration of the first control system and the second control system depends on how the user wants to use the electronic device or depends on the remaining battery level of the electronic device. For example, when the user wants to use the electronic device as a feature phone, it is indicative of that the rich application mode is not required, and the battery life of the electronic device may last as long as possible. Thus, the second control system 120 operates as the primary active system for the feature phone, and most components of the first control system 110 can be set to enter the sleep mode. However, the feature phone function requires the modem (not shown in FIG. 1) deployed in the first control system 110 to make phone calls, and thus the infrastructure 120 and the modem in the first control system 110 can be turned on for the phone call function of the second control system 120. Meanwhile, the first control system 110 can be regarded as an assisted active system in this configuration, as shown in FIG. 3A.

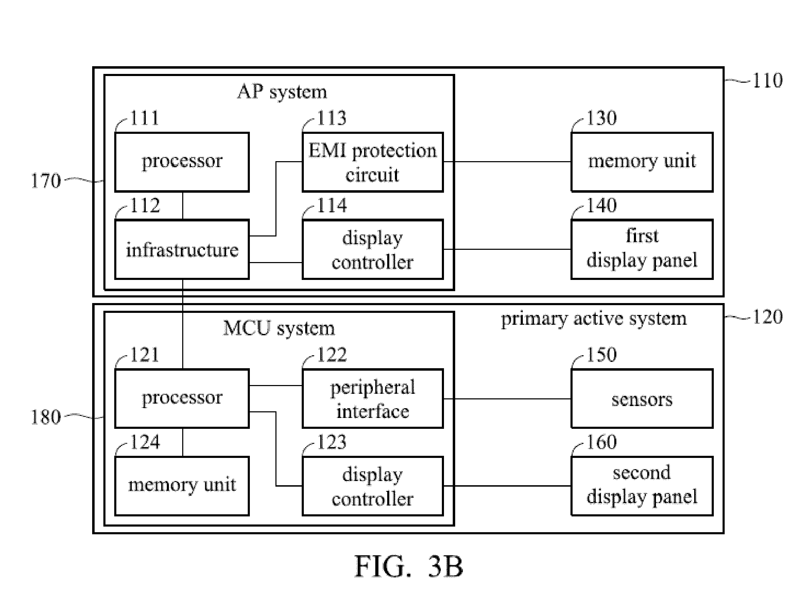

Alternatively, the electronic device 100 can be used as a smart watch, as shown in FIG. 3B. Since the functions of a smart watch (e.g. time, pedometer) are much simpler than those of a feature phone, the second control system 120 operates as the primary active system for the smart watch configuration because the peripheral components such as the timing unit and the sensors are deployed in the second control system 120. In this configuration, the first control system 110 can fully enter the sleep mode to save power.

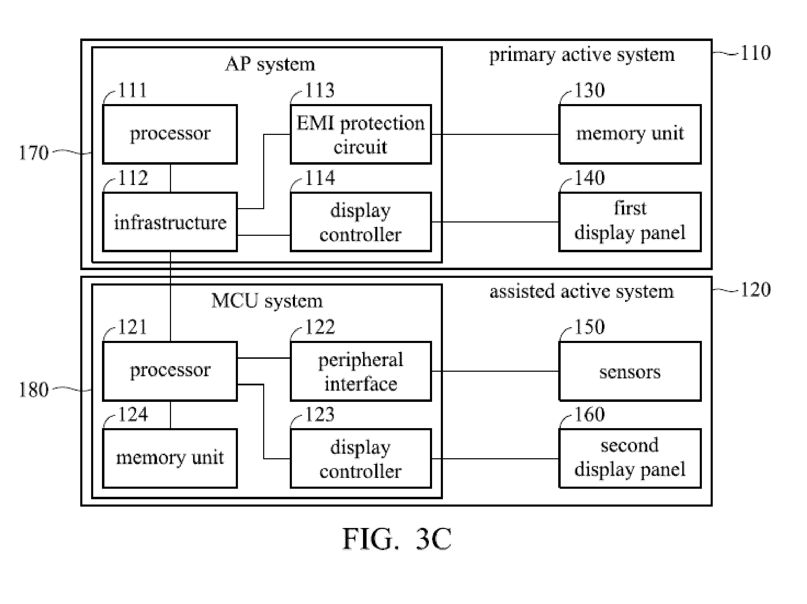

Alternatively, the electronic device 100 can be used as a smartphone, as shown in FIG. 3C. Since the electronic device 100 has to operate in the rich application mode as being a smartphone, the first control system 110 operates as the primary active system. In addition, the sensor data from the sensors or other peripherals in the second control system 120 may also be used by the applications running in the first control system 110, and the second control system 120 can be regarded as an assisted active system in this configuration.

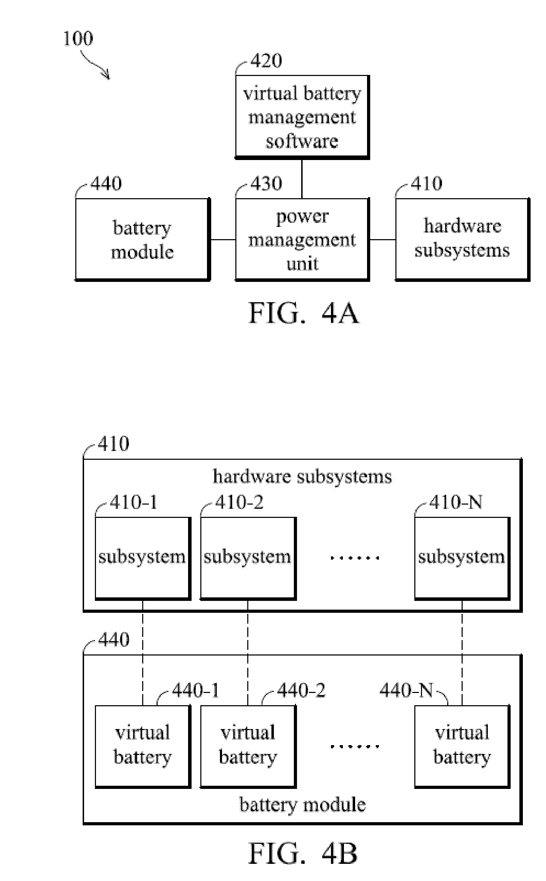

FIG. 4A is a diagram of a virtual battery partitioning structure in accordance with an embodiment of the invention. In an embodiment, the virtual battery partitioning structure 400 of the electronic device 100 may include hardware subsystems 410, virtual battery management software 420, a power management unit 430, and the battery module 440. The battery module 440 is configured to power the various components of the electronic device 100. For example, the battery module 440 includes one or more batteries, such as lithium polymer (Li-Poly), lithium ion (Li-Ion), nickel metal hydride (NiMH) or nickel cadmium (NiCad) batteries ... etc.. Alternatively, the battery module 440 includes one or more disposable batteries, such as a zinc-carbon battery. The batteries in the battery module 440 have the capacity to store electric charges for powering the electronic device 100, as opposed to a virtual battery which is a logical construct configured on the electronic device 100 as outlined herein. Although the battery module 440 is described primarily with respect to batteries, it can include any other suitable type of energy-providing mechanism, such as capacitors and/or any suitable combination of capacitors and batteries.

The virtual battery management software 420 is configured to define the power-budget allocation of each subsystem, and the power management unit 430 may manage power control of each subsystem based on the allocated power budget defined by the virtual battery management software 420. For example, the virtual battery management software 420 may retrieve the power consumption information from the power management unit 430 and the hardware subsystems 410. Afterwards, the virtual battery management software 420 may estimate the remaining battery level of each virtual battery and the physical battery based on the power consumption information, and send the estimated remaining battery level of each virtual battery to the power management unit 430, so that the power management unit 430 may update the information of the allocated power budget of each subsystem.

In addition, the components in the first control system 110 and the second control system 120 can be further divided into a plurality of subsystems depending on the configurations in the embodiments of FIGs. 3A∼3C. For example, the usage of a smart watch aims for the time and the pedometer function, and thus the timing unit and the pedometer in the second control system 120 can be classified as a smart watch subsystem. In addition, the usage of a feature phone aims for the phone function and the battery life, and thus the components associated with the phone function can be classified as a feature phone subsystem, such as the modem in the first control system 110 and the processor 121 in the second control system 120. Furthermore, the electronic device 100 can also be used as a smartphone, and rich applications are executed by the first control system 110. Thus, the components associated with the smartphone function can be classified as a smartphone subsystem, such as all components in the first control system 110 and some peripherals in the second control system 120. The aforementioned subsystems are categorized as the hardware subsystems 410 shown in FIG. 4A, which are named subsystems 410-1, 410-2,...through 410-N, for example.

In this embodiment, a virtual battery is a logical construct on the electronic device 100 that powers a defined set of applications and has a defined power budget from one or more physical batteries on the electronic device 100. The processors 111 and 121 may execute virtual battery management software 420 which is pre-stored in a non-volatile memory (not shown in FIG. 1) and is configured to maintain power budget information for subsystems of the electronic device 100. For example, the virtual battery management software may monitor the power usage of each subsystem of the electronic device 100, and allocate a power budget for the virtual battery of each subsystem.

FIG. 4B is a diagram of virtual battery arrangement and mapping to subsystems in accordance with an embodiment of the invention. Referring to FIG. 4B, the hardware subsystems 410 may comprise an application subsystem, a connectivity subsystem, a watch subsystem, a standby subsystem, a communication subsystem, a data link subsystem, and/or the subsystems mentioned in the embodiments of FIGs. 3A∼3C. It should be noted that the invention is not limited to the aforementioned types of subsystems, the classification of subsystems can be determined according to practical situations. The virtual battery management software 420 may determine the number of predefined subsystems, and then create partitions of virtual batteries of the subsystems. For example, the physical battery in the battery module 440 can be arranged as virtual batteries 440-1, 440-2,...through 440-N. The virtual battery 440-1 may map to the subsystem 410-1, and the virtual battery 440-2 may map to the subsystem 410-2, and so on through the virtual battery 440-N mapping to the subsystem 410-N. For simplicity, the number of subsystems is 2 (e.g. the first control system and the second control system) in the embodiment of FIGs. 3A∼3C.

In an embodiment, the classifications of the subsystems may also be defined by application usage and/or hardware usage. Alternatively, applications or software processes executed by the processors 111 and 121 may span different subsystems. Specifically, the configuration of the subsystems and the capacity of the virtual batteries can be preset based on the usage of the electronic device 100 and/or the type of the electronic device 100. For example, when the electronic device 100 is a wearable device such as a smart watch, the watch subsystem and the pedometer subsystem, which are mainly focused by the user. Accordingly, the virtual battery management software may allocate greater power budget, i.e. higher capacity of the virtual battery, for the watch subsystem and the pedometer system, thereby guaranteeing a longer usage time of the watch subsystem and the pedometer subsystem.

Each subsystem has individual virtual battery, i.e. power budget, and different daily of use (DoU). The virtual battery of each subsystem is independent from each other, and each subsystem acts as if it has its own battery. Although the subsystems share the same battery in the battery module 440, the virtual battery management software may allocate an individual virtual battery for each of the subsystems. Specifically, the virtual battery management software may allocate different power budget for each subsystem and estimate the remaining battery capacity in each virtual battery based on the feedback information from the power management unit 430 and the subsystems 410.

Generally, the power budget of the application subsystem is much greater than that of other subsystems since the power consumption of the application subsystem, e.g. smartphone subsystem, is extremely huge when compared with other subsystems. However, the sustainability of the connectivity subsystem and the watch subsystem is more important for a user in some situations. For example, given that the electronic device 100 is a wearable device, a user may want to keep the watch/clock function or the pedometer function alive as long as possible even when the virtual battery of the application subsystem is exhausted. Alternatively, the electronic device 100 should be ready whenever the user wants to make a phone call or receive emails or messages. That is, the modem and connectivity subsystems should be alive as long as possible in this case.

Specifically, referring to FIGs. 3A∼3C again, the electronic device 100 may be initially operated as a smartphone. When the battery level of the virtual battery for the smartphone subsystem is lower than a first predetermined threshold, the electronic device 100 may switch the hardware configuration to a feature phone as shown in FIG. 3A. Furthermore, when the battery level of the virtual battery for the feature phone subsystem is lower than a second predetermined threshold, the electronic device 100 may further switch the hardware configuration to a smart watch as shown in FIG. 3B. In other words, the electronic device 100 is capable of dynamically switching the hardware configurations (e.g. smartphone, feature phone, and smart watch, but not limited) according to the remaining battery level of the virtual battery of each subsystem.

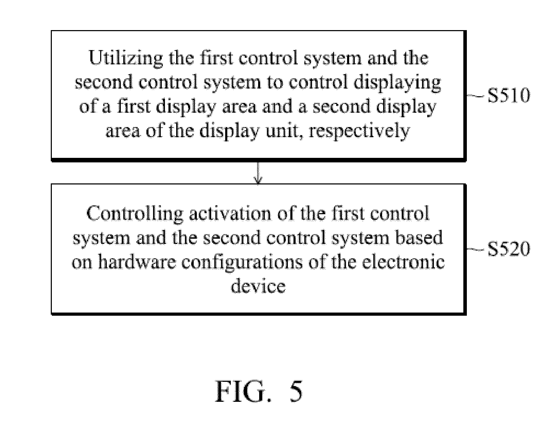

FIG. 5 is a flow chart of the low-power optimization method in accordance with an embodiment of the invention. In step S510, the first control system and the second control system are utilized to control displaying of a first display area and a second display area of the display unit, respectively. In step S520, activation of the first control system and the second control system is controlled based on hardware configurations of the electronic device. It should be noted that the first display area, e.g. a user interface of rich applications, is larger than the second display area, e.g. a smart bar including several simple icons, and the second control system has lower active power than the first control system.

In an embodiment, the second control system 120 is capable of performing an electronic ticket application. Since the second control system 120 is an ultra-low-power execution environment for running applications, the second control system 120 is still capable of executing the electronic ticket application and showing the electronic ticket on the second display panel 160 when the battery level of the virtual battery for the second control system 120 is low.

In view of the above, an electronic device and associated low-power optimization method are provided. The electronic device and the associated low-power optimization method are capable of activating different control systems based on hardware configurations of the electronic device, so that the usage mode of the electronic device (e.g. smartphone, feature phone, or smart watch) can be alternated with different hardware configurations.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic device, comprising:
a display unit, comprising a first display area and a second display area;
a first control system; and
a second control system,
wherein the first control system and the second control system control displaying of the first display area and the second display area, respectively,
wherein activation of the first control system and the second control system is based on a hardware configuration of the electronic device;
wherein the first display area is larger than the second display area, and the second control system has lower active power than the first control system.

2. The electronic device as claimed in claim 1, wherein the display unit comprises a first display panel and a second display panel, and the first control system and the second control system control displaying of the first display panel and the second display panel on the first display area and the second display area, respectively.

3. The electronic device as claimed in claim 2, wherein the first control system comprises a processor, a first memory unit, and a first display controller, and the processor controls displaying of the first display panel via the first display controller,
wherein the second control system comprises a controller, a second memory unit, a second display controller, and a plurality of sensors, and the controller controls displaying of the second display panel via the second display controller, and the plurality of sensors is coupled to the controller.

4. The electronic device as claimed in claim 1, wherein the display unit is a display panel, and the first control system and the second control system control displaying of the first display area and the second display area of the display panel, respectively.

5. The electronic device as claimed in claim 1, wherein the first control system is a primary active system and the second control system is an assisted active system when a first hardware configuration is applied to the electronic device.

6. The electronic device as claimed in claim 1, wherein the second control system is a primary active system and the first control system is an assisted active system when a second hardware configuration is applied to the electronic device.

7. The electronic device as claimed in claim 1, wherein the second control system is a primary active system and the first control system enters a sleep mode when a third hardware configuration is applied to the electronic device.

8. The electronic device as claimed in claim 7, wherein the first control system is awakened to a working mode from the sleep mode by pressing an icon displayed on the second display area.

9. The electronic device as claimed in claim 7, wherein the first control system is awakened to a working mode from the sleep mode by the second control system when a predetermined gesture performed on the second display area is detected by the second control system.

10. The electronic device as claimed in claim 1, further comprising:
a battery for powering the first control system and the second control system,
wherein a first virtual battery and a second virtual battery are allocated from the battery for the first control system and the second control system, respectively, and the first virtual battery and the second virtual battery have individual predefined power budget ratios from the battery,
wherein the hardware configuration is determined according to the remaining battery level of the first virtual battery and the second virtual battery.

11. A low-power operation method for an electronic device, wherein the electronic device comprises a display unit, a first control system, and a second control system, the method comprising:
utilizing the first control system and the second control system to control displaying of a first display area and a second display area of the display unit, respectively;
controlling activation of the first control system and the second control system based on a hardware configuration of the electronic device,
wherein the first display area is larger than the second display area, and the second control system has lower active power than the first control system.

12. The method as claimed in claim 11, wherein the first control system is a primary active system and the second control system is an assisted active system when a first hardware configuration is applied to the electronic device.

13. The method as claimed in claim 11, wherein the second control system is a primary active system and the first control system is an assisted active system when a second hardware configuration is applied to the electronic device.

14. The method as claimed in claim 11, wherein the second control system is a primary active system and the first control system enters a sleep mode when a third hardware configuration is applied to the electronic device.

15. The method as claimed in claim 11, wherein the electronic device comprises a battery for powering the first control system and the second control system,
wherein a first virtual battery and a second virtual battery are allocated from the battery for the first control system and the second control system, respectively, and the first virtual battery and the second virtual battery have an individual predefined power budget ratio from the battery,
wherein the hardware configuration is determined according to the remaining battery level of the first virtual battery and the second virtual battery.
